Europäisches Patentamt

European Patent Office

Office européen des brevets

(11) Publication number: **0 211 498**
A1

# (12) EUROPEAN PATENT APPLICATION

(21) Application number: **86304822.9**

(22) Date of filing: **23.06.86**

(51) Int. Cl.⁴: **B 60 B 21/12**
**B 60 C 17/04, B 60 B 21/02**

(30) Priority: **29.06.85 GB 8516521**

(43) Date of publication of application:
**25.02.87 Bulletin 87/9**

(84) Designated Contracting States:
**DE FR GB IT**

(71) Applicant: **SP TYRES UK LIMITED**
**Fort Dunlop**
**Erdington Birmingham B24 9QT(GB)**

(72) Inventor: **Udall, William Stanley**
**6 Silverbirch Road Streetly**
**Sutton Coldfield West Midlands, B 74 3PD(GB)**

(74) Representative: **Stewart, Charles Geoffrey**
**SP TYRES UK LIMITED Tyre Technical Division**
**Fort Dunlop Birmingham B24 9QT(GB)**

(54) Vehicle wheel.

(57) A wheel rim for a pneumatic tyre comprising bead seats, (1,2) a conventional tyre bead fitting well (13) and located within said fitting well a circumferentially extending tyre support member characterised in that the support member comprises a pair of parallel, circumferentially extending support ring surfaces (6,7) one at either side of a secondary tyre bead fitting well (11) having a depth such that a bead of a tyre for which the wheel rim is intended may be assembled over one or other of the support ring surfaces (6,7) using the secondary fitting well (11) in the conventional tyre bead fitting process.

Fig.1.

EP 0 211 498 A1

# VEHICLE WHEEL

This invention relates to a vehicle wheel and in particular to vehicle wheels which include a rigid or substantially rigid, circumferentially extending support surface or ring which is of greater radius than the bead seats which is intended to contact the inside of a deflated tyre and provide for support of the vehicle.

Various types of such support rings are known including fitted rings, rings rotatably mounted in a bearing arrangement in the wheel rim and recently rings integral with the wheel rim itself. All known types however, suffer from difficulties in assembly. These difficulties often require multi-piece wheels or in some cases multi-piece rings and most also leave it impossible to see in an assembled tyre and wheel whether or not the ring is in place.

It is an object of the present invention to provide a support construction which obviates these problems and allows tyre and wheel assembly by basically conventional methods.

According to one aspect of the present invention a wheel rim for a pneumatic tyre comprises bead seats, a conventional tyre bead fitting well and located within said fitting well a circumferentially extending tyre support member wherein the support member comprises a pair of parallel, circumferentially extending support ring surfaces one at either side of a secondary tyre bead fitting well having a depth such that a bead of a tyre for which the wheel rim is intended may be assembled over one or other of the support ring surfaces using the secondary fitting well in the conventional tyre bead fitting process.

The wheel rim may have the support ring surfaces with a substantially greater height in the radial direction than the radii of the bead seats.

Preferably the support ring surfaces are centrally positioned in the conventional fitting well so that a bead fitting well region is additionally provided at both sides of the wheel rim adjacent to each bead seat.

The support ring surfaces may be integral with the remainder of the wheel rim. Furthermore the support ring surfaces may be interconnected by a base region to define the secondary fitting well and thus provide a single component support member.

The single component support member may be rotatably mounted in the wheel rim.

In all arrangements it is preferred to provide bead retention means adjacent to each bead seat.

Further aspects of the present invention will be apparent from the following description, by way of example only, in conjunction with the attached diagramatic drawings in which:-

Fig 1 is a part cross section of a one piece wheel rim.
Fig 2 is a part cross section of a two piece wheel rim.
Fig 3 is a scrap cross sectional view showing details of an alternative bead seat.

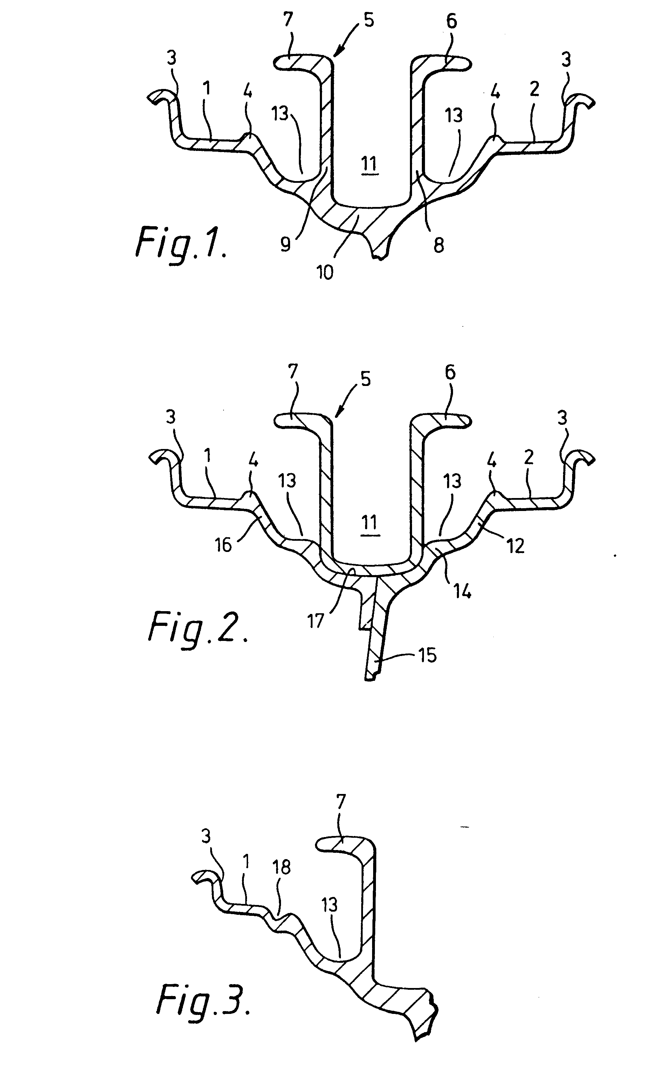

The one piece wheel rim construction shown in Fig 1 comprises a pair of conventional circumferential extending bead seats 1 & 2 each of which is tapered at an angle of 5° to the axial centreline of the wheel rim. The bead seats 1 & 2 each terminate in a radially outward projecting tyre retaining flange 3. Adjacent to bead seats 1 & 2 and axially inwards thereof is a tyre toe retaining hump 4.

A circumferentially extending continuous support member 5 is provided integrally with the remainder of the wheel by means of two parallel support limbs 6 & 7. The support limbs 6 & 7 have their radially inner edges 8 & 9 attached to the radially inner portion 10 of the wheel rim. The construction of the support limbs 6 & 7 and the inner region 10 provides, as shown in Fig 1, a 'U' shaped cross section for the support member with a deep secondary tyre bead fitting well 11. Each bead seat 1 & 2 is connected to the inner region 10 by a radially and axially inwardly extending portion 12 which is shaped to provide between each bead seat and its adjacent support limbs 6 or 7 part of a conventional tyre fitting well 13.

The construction as a whole therefore, provides a wheel rim having conventional bead seats 1 & 2, adjacent to the bead seats a semi-conventional fitting well comprising the parts 13 but in the centre of the fitting well a support member having a 'U' shaped centre region which provides a secondary fitting well 11 which is substantially deeper in the radial direction than the conventional fitting well parts 13. It should be noted that the assembly is a one piece assembly which may be made by either welding together components or by casting the wheel rim in one piece.

The height of the support member 5 measured radially from the wheel is substantially higher than the height of the flange 3 so that when a tyre is run deflated fitted to the wheel rim the inside surface of the tyre tread may be supported upon the support member 5 and substantially higher than can be achieved with other one piece support systems.
The assembly is carried out by presenting the wheel rim to a tyre in the conventional manner and placing the first tyre bead into the well part 13 at one side and then buttonholing the remainder of the bead over its flange 3. This tyre bead is then fitted over the first support limb by means of putting part of the bead into the secondary well 11 and buttonholing the remainder of the bead over the support limb 6 so that the whole circumference of the bead is in the secondary well 11.

It is important to note that the large depth of the secondary well 11 is arranged specifically to allow this action.

The tyre bead may then be moved over the second support limb 7 and at the same time the left hand bead seat 1 and flange 3 by the same technique. Both tyre beads can then be fitted over their tyre flanges in the conventional manner into the well parts 13 and the tyre inflated to fit both beads to their bead seats 1 & 2.

The construction shown in Fig 2 is basically the same as that so far described but it uses a two part wheel rim which is circumferentially divided into a first wheel rim component 14 which includes the wheel disc 15 and a second wheel rim component 16. In this case the support member 5 again comprises a pair of support limbs 6 & 7 but these are interconnected to form a 'U' shaped support member which is separate from the remainder of the wheel rim. The wheel rim components 14 & 16 are shaped to include a bearing 17 to accommodate the support member 5. The other dimensions of the rim and in particular the depth of the well part 13 and the secondary fitting well 11 are as described in the first embodiment. In this construction the support member 5 is rotatably mounted in the bearing 17 which provides in no manner a support member for a tyre running flat which reduces the abrasion on the inside of the tyre.

Both the above embodiments use small tyre retaining humps 4 but alternative bead retention systems may be used. The embodiment shown in Fig 3 uses a circumferentially extending groove 18 adjacent to the bead seat which is designed to accept an axially and radially inwardly projecting toe on the tyre bead. This type of bead retention is known as the TD bead retention system.

The construction may also be used without a bead retention means although it is preferred to use one. A lubricant/cushioning layer may be used on the support surface member.

# CLAIMS

1. A wheel rim for a pneumatic tyre comprising bead seats,(1,2) a conventional tyre bead fitting well (13) and located within said fitting well a circumferentailly extending tyre support member characterised in that the support member comprises a pair of parallel, circumferentially extending support ring surfaces (6,7) one at either side of a secondary tyre bead fitting well (11) having a depth such that a bead of a tyre for which the wheel rim is intended may be assembled over one or other of the support ring surfaces (6,7) using the secondary fitting well (11) in the conventional tyre bead fitting process.

2. A wheel rim according to claim 1 characterised in that the support ring surfaces (6,7) have a radial height substantially greater than the bead seat (1,2) radii,

3. A wheel rim according to claim 1 or claim 2 characterised in that the support ring surfaces (6,7) are centrally positioned in the conventional fitting well (13) to provide a bead fitting well region at both sides of the wheel rim one adjacent each tyre bead seat (1,2).

4. A wheel rim according to claim 3 charcaterised by the bead fitting well (13) having in both its regions a radial depth substantially less than the radial depth of the secondary fitting well (11).

5. A wheel rim according to claim 3 or 4 characterised in that the support ring surfaces (6,7) are integral with the remainder of the wheel rim.

6. A wheel rim according to claims 1,2,3 or 4 characterised in that support ring surfaces (6,7) are interconnected by a base region (10) radially inwards of, and defining the secondary fitting well (11) to form a single component support member(5).

7. A wheel rim according to claim 6 characterised in that the single component support member (5) is rotatably mounted in the wheel rim so that the support member may rotate when a deflated tyre is run on a vehicle on the wheel rim.

8. A wheel rim according to any one of claims 1-7 characterised in that bead retention means (4,18) are provided adjacent each bead seat.

0211498

1/1

Fig.1.

Fig.2.

Fig.3.

# EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | GB-A-1 451 227  (BETANCOURT)<br>* Page 2, lines 3-21; figures 1,2 * | 1 | B 60 B  21/12<br>B 60 C  17/04<br>B 60 B  21/02 |
| A | US-A-2 775 282  (KENNEDY)<br>* Column 3, line 22 - column 4, line 1; figure 2 * | 1 | |
| A | US-A-2 844 180  (OMERON)<br>* Column 1, line 60 - column 2, line 12; figures 1-3 * | 1 | |

TECHNICAL FIELDS
SEARCHED (Int. Cl.4)

B 60 B
B 60 C

The present search report has been drawn up for all claims

| Place of search | Date of completion of the search | Examiner |
|---|---|---|
| THE HAGUE | 27-10-1986 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82